# EUROPÄISCHE PATENTSCHRIFT

(11) **EP 2 955 296 B1**
(45) Veröffentlichungstag und Bekanntmachung des Hinweises auf die Patenterteilung: **21.03.2018**
(21) Anmeldenummer: 15001461.1
(22) Anmeldetag: 15.05.2015
(51) Int. Cl.: E04F 15/02, B33Y 80/00

(54) **VERFAHREN ZUM HERSTELLEN EINES PANEELS UND PANEEL**
METHOD FOR MANUFACTURING A PANEL AND PANEL
PROCÉDÉ DE FABRICATION D'UN PANNEAU ET PANNEAU

(30) Priorität: 12.06.2014 EP 14002024
(43) Veröffentlichungstag der Anmeldung: 16.12.2015
(73) Patentinhaber: Flooring Technologies Ltd., Kalkara SCM 1001 (MT)
(72) Erfinder: Hecht, Hendrik, 16816 Buskow (DE); Kalwa, Norbert, 32805 Horn-Bad Meinberg (DE)
(74) Vertreter: Friedrich, Andreas

(56) Entgegenhaltungen:
- WO-A1-02/060691
- WO-A1-2014/011110
- DE-U1-202011 109 396
- US-A1- 2014 017 452

## Beschreibung

Die Erfindung betrifft ein Verfahren zum Herstellen eines Paneels, insbesondere eines Fußbodenpaneels, das eine Oberseite, eine der Oberseite gegenüberliegenden Unterseite und wenigstens eine Seitenfläche aufweist. Die Erfindung betrifft zudem ein durch ein derartiges Verfahren hergestelltes Paneel. Fußbodenpaneele in Form eines Laminatfußbodens bilden einen der weltweit am weitesten verbreiteten Bodenbeläge. Während ein derartiger Laminatfußboden ursprünglich aus einer Vielzahl von einzelnen Paneelen bestand, die miteinander verleimt werden mussten, hat sich im Stand der Technik die leimlose Verlegung beispielsweise unter dem Begriff "Klicklaminat" durchgesetzt. Bei einer leimlosen Verlegung muss jedoch sichergestellt werden, dass die Paneele im einmal verlegten Zustand auch bei mechanischer Belastung nicht relativ zueinander bewegt werden können, da ansonsten Rillen und Spalten entstehen können. Zudem muss sichergestellt sein, dass durch die im verlegten Zustand vorhandenen kleinen Fugen zwischen einzelnen benachbarten Paneelen eindringende Feuchtigkeit nicht in die Seitenfläche des Paneels eindringen kann, wodurch eine Beschädigung des jeweiligen Paneels hervorgerufen werden würde.
Paneele und insbesondere Fußbodenpaneele bestehen in der Regel aus einem Kern, der oftmals aus einer Holzwerkstoffplatte, beispielsweise einer hochdichten Faserplatte (HDF) oder einer mitteldichten Faserplatte (MDF) besteht. Auch andere Holzwerkstoffplatten und Werkstoffe sind als Kern bereits verwendet worden. Auf der Oberseite werden Beschichtungen aufgebracht, die einerseits das optische Erscheinungsbild des Paneels und andererseits Eigenschaften der insbesondere bei Fußbodenpaneelen stark belasteten Oberseite bestimmen. Dies können die Abriebfestigkeit erhöhende Schichten oder andere Schutzschichten sein. Auf der Unterseite werden oftmals ein Gegenzug und gegebenenfalls eine Trittschalldämmung aufgebracht. Oftmals verfügen derartige Fußbodenpaneele an ihren Seitenflächen über Verriegelungselemente, mit denen die Bewegung benachbarter Fußbodenpaneele relativ zueinander im verlegten Zustand verhindert werden soll. Diese werden in der Regel aus dem Kernmaterial des Paneels gefertigt und aus den Seitenflächen der fertigen Paneele herkömmlicherweise herausgefräst. An dieser Stelle eindringende Feuchtigkeit kann zur Beschädigung des Materials und damit zu einer Verringerung der mechanischen Stabilität der Verriegelungselemente führen. Zudem kann es zum Aufquellen des Materials kommen, wodurch der Fußboden auch optisch beeinträchtigt würde.

Durch Fußbodenpaneele können eine Vielzahl unterschiedlicher Fußbodenmaterialien, beispielsweise Stein, Fliesen oder Echtholzfußböden, nachgebildet werden. Dabei ist es wichtig, für den optischen und den haptischen Eindruck des verlegten Fußbodens insbesondere die Fugen zwischen benachbarten Fußbodenelementen möglichst realitätsnah nachzubilden. Dazu werden im Stand der Technik beispielsweise Zusatzelemente in dafür vorgesehene Nuten in der Seitenfläche eingelegt oder eingeklemmt, die einen Teil der Oberfläche bilden und oftmals nur dekorative Aufgaben erfüllen. Zusätzlich muss die Seitenfläche versiegelt werden, was wegen der oftmals strukturierten Seitenfläche, die gegebenenfalls eine Profilierung aufweist, aufwändig und zudem aufgrund von vorhandenen Hinterschneidungen fehleranfällig ist.

Aus der WO 02/060691 A1 ist ein Verfahren zum Herstellen von Verriegelungselementen bekannt, bei dem zunächst eine Grundform, beispielsweise eine einfache Nut, in eine Seitenfläche des Paneels eingebracht wird. Anschließend wird ein zweites Material auf diese so geschaffene Grundform aufgebracht, bevor beispielsweise mittels Räumwerkzeugen die gewünschte Form der Verriegelungselemente eingebracht wird.

Die DE 20 2011 109 396 U1 offenbart plattenförmige Elemente zum Verkleiden von Flächen, bei denen zwischen den Elementen Dichtungen vorhanden sein sollen, die insbesondere gegen Feuchtigkeit schützen. Diese verfügen über Verriegelungselemente und bestehen aus einem Gummi oder entsprechendem Kunststoff und werden beispielsweise angegossen oder angespritzt.

Aus der US 2014/017452 A1 und der WO 2014/011110 A1 ist ein Verfahren bekannt, bei dem auf die Oberfläche einer Holzwerkstoffplatte eine dekorative Schicht aufgedruckt wird, die anschließend mit einer Schutzschicht versehen wird, die beispielsweise 0,1 bis 0,2 mm dick ist und über einen Digitaldrucker aufgebracht werden kann.

Der Erfindung liegt daher die Aufgabe zu Grunde, ein Verfahren zum Herstellen eines Paneels, insbesondere eines Fußbodenpaneels, so zu verbessern, dass es einfacher und kostengünstiger herstellbar ist und die Möglichkeiten der optischen und haptischen Gestaltung eines Zwischenraums zwischen zwei benachbarten Paneelen erweitert werden.

Die Erfindung löst die gestellte Aufgabe durch ein Verfahren zum Herstellen eines Paneels, insbesondere eines Fußbodenpaneels, das eine Oberseite, eine der Oberseite gegenüberliegende Unterseite und wenigstens eine Seitenfläche aufweist, wobei sich das Verfahren dadurch auszeichnet, dass die eine Seitenfläche wenigstens teilweise mittels eines 3D-Druckers mit einem Versiegelungsmaterial bedruckt wird, wobei ein Teil des Versiegelungsmaterials einen Teil der Oberseite des Paneels bildet. In einer bevorzugten Ausgestaltung wird die gesamte Seitenfläche bedruckt.

Auf diese Weise ist es besonders einfach möglich, zumindest einen Teil der Seitenfläche, vorteilhafterweise jedoch die gesamte Seitenfläche, des Paneels gegen das Eindringen von Wasser zu versiegeln, sodass beispielsweise auch Fußbodenpaneele für Feuchträume, beispielsweise Badezimmer, herstellbar sind. Zudem wird die Seitenfläche des Paneels mittels des 3D-Druckers wenigstens teilweise entlang der Seitenkante der Seitenfläche bedruckt, sodass ein Teil des aufgebrachten Versiegelungsmaterials einen Teil der Oberfläche des Paneels bildet. Auf diese Weise lässt sich das mittels des 3D-Druckers aufgebrachte Versiegelungsmaterial auch zu dekorativen Zwecken an der Oberseite des Paneels verwenden. Dazu ist es von Vorteil, wenn die Seitenfläche vollständig wenigstens entlang der Seitenkante zur Oberseite des Paneels bedruckt wird. Dies kann jedoch vorzugsweise auch mit unterschiedlichen Materialien geschehen, sodass durch einen auf diese Weise zu erreichenden Materialmix entlang der Seitenkante zwischen der jeweiligen Seitenfläche und der Oberseite des Fußbodenpaneels dekorative Effekte hervorgerufen werden können.

Natürlich kann die jeweilige Seitenfläche auch entlang der gegenüberliegenden Seitenkante, also der zwischen der Unterseite und der Seitenfläche verlaufenden Seitenkante, vollständig bedruckt werden.

Erfindungsgemäß bildet folglich ein Teil des mittels des 3D-Druckers aufgebrachten Materials einen Teil der Oberseite des Paneels. Dazu wird beispielsweise an der Kante, an der die Seitenfläche mit der Oberseite zusammentrifft, wenigstens eine Schicht des Versiegelungsmaterials mit dem 3D-Drucker aufgetragen. Im verlegten Zustand, in dem zwei Paneele miteinander verbunden sind, ist dieses Material daher sichtbar und kann für dekorative und ästhetische Zwecke verwendet werden. Da es sich bei dem mit dem 3D-Drucker aufgebrachten Versiegelungsmaterial in der Regel um einen anderen Werkstoff handelt, als er für den Rest der Oberseite des Paneels verwendet wird, lassen sich eine Vielzahl unterschiedlicher dekorativer Effekte erzielen.

Vorteilhafterweise wird das Versiegelungsmaterial so aufgedruckt, dass der Teil der Oberfläche des Paneels, der durch das Versiegelungsmaterial gebildet wird, eine Oberflächenstruktur aufweist. Die Erzeugung von Oberflächenstrukturen in dem Bereich der Oberseite, der durch das Versiegelungsmaterial gebildet wird, ist mittels des 3D-Druckers leicht möglich. Auch große und insbesondere tiefe Strukturen lassen sich mittels des 3D-Druckers einfach erzeugen, sodass beispielsweise Fliesenfugen oder Fugen zwischen Steinplatten besonders einfach und realistisch nachgebildet werden können. Durch die für den 3D-Druck verwendeten Materialien können außerdem auch andere Funktionalitäten, wie beispielsweise die elektrische Leitfähigkeit, eine Informationsleitung oder eine Lichtleitung erzeugt werden.

Das aufgedruckte Versiegelungsmaterial, das einen Teil der Oberfläche des Paneels bildet, dient vorteilhafterweise dabei ausschließlich dekorativen Zwecken.

Als vorteilhaft hat sich herausgestellt, wenn die Oberflächenstruktur derart ausgebildet ist, dass im verlegten Zustand zweier Paneele eine Fuge, insbesondere eine Steinfuge, Fliesenfuge oder Parkettfuge, nachgebildet wird.

In einer bevorzugten Ausgestaltung des Verfahrens wird in die wenigstens eine Seitenfläche eine Profilierung eingebracht, bevor die Seitenfläche mit dem Versiegelungsmaterial bedruckt wird. Vorzugsweise handelt es sich bei der Profilierung um eine Fase und/oder eine Nut und/oder eine Feder und/oder einen modifizierten Falz. Dadurch kann der Materialaufwand für den 3D-Druck reduziert werden, was zu einer weiteren Reduzierung der Herstellungskosten und zu einer Beschleunigung des Verfahrens führt. Da 3D-Drucker das aufzubringende Material in Form einer Vielzahl dünner Schichten aufbringen, ist der Herstellungsaufwand relativ hoch, insbesondere dann, wenn ein relativ großer Anteil der Oberfläche des Paneels durch das Versiegelungsmaterial gebildet werden soll. Werden die Profilierungen in die Seitenfläche eingebracht, können diese sehr einfache Formen, beispielsweise eine einfache Nut oder Feder, beinhalten. Diese sind beispielsweise über Standardfräs- oder Sägewerkzeuge kostengünstig, schnell und genau herstellbar. Natürlich sind auch kompliziertere Profilierungen möglich.

Vorteilhafterweise ist an der wenigstens einen Seitenfläche ein Verriegelungselement angeordnet, das zumindest teilweise mittels des 3D-Druckers aufgedruckt wird. Da das Verriegelungselement zumindest teilweise aufgedruckt wird, kommt es hier zu einer ausreichend festen und stabilen Verbindung zwischen beispielsweise dem Kernmaterial des Paneels, das einen Teil der zu bedruckenden Seitenfläche bildet, und dem aufgedruckten Verriegelungselement aus dem Versiegelungsmaterial oder einem anderen Material. Natürlich können auch unterschiedliche Materialien verwendet werden. Gleichzeitig kann für das Verriegelungselement ein Material gewählt werden, das nicht gleichzeitig das Material des Kerns des Paneels ist. Auf diese Weise ist es möglich, das Kernmaterial des Paneels auf die geforderten Eigenschaften hin zu optimieren und gleichzeitig Verriegelungselemente bereitzustellen, die andere Eigenschaften aufweisen und auf die Bedürfnisse bei Verriegelungselementen optimiert sind. Auf diese Weise werden Verriegelungselemente aus einer Vielzahl dünner Schichten aufgebaut. Es ist daher nicht nötig, die Verriegelungselemente, wie dies im Stand der Technik bekannt ist, aus dem eigentlichen Paneel beziehungsweise dessen Kernmaterial herauszusägen oder herauszufräsen. Die damit verbundenen Einschränkungen der möglichen Strukturen, Richtungen und Werkzeuge sind beim Verfahren gemäß diesem Ausführungsbeispiel der vorliegenden Erfindung nicht mehr vorhanden. Durch das Aufdrucken der Verriegelungselemente durch den 3D-Drucker lassen sich auch komplizierteste Profile für einzelne Verriegelungselemente, beispielsweise mit Hinterschneidungen, realisieren, sodass neben dem für die Anforderungen von Verriegelungselementen optimierten Material auch beispielsweise bezüglich der Auszugfestigkeit optimierte oder verbesserte Profile verwendet werden können.

In einer bevorzugten Ausgestaltung verfügt das Paneel, insbesondere das Fußbodenpaneel, beispielsweise über einen Kern aus einem leichten Holzwerkstoff. Bei diesem ist gegenüber den bisher zu verwendenden dichten und hochdichten Faserplatten der Leimanteil reduziert, wodurch neben dem Gewicht auch die Herstellungskosten reduziert werden können. Diese Paneele sind für den Endanwender folglich einfacher und leichter zu handhaben, sind leichter zu transportieren und weisen bessere Eigenschaften aufgrund der gegebenenfalls höheren Elastizität auf.

Vorteilhafterweise werden an wenigstens zwei einander gegenüberliegenden Seitenflächen zueinander korrespondierende Verriegelungselemente jeweils wenigstens teilweise mittels eines 3D-Druckers auf der jeweiligen Seitenfläche aufgedruckt. Natürlich können einzelne oder alle Verriegelungselemente auch vollständig durch den 3D-Drucker aufgebracht werden. Dies ist insbesondere unabhängig davon, auf wie vielen Seitenflächen Verriegelungselemente aufgebracht werden sollen. Insbesondere falls an gegenüberliegenden Seitenflächen die Verriegelungselemente mit dem 3D-Drucker aufgedruckt werden, ist es möglich, die einzelnen Profile besonders genau aufeinander abzustimmen. Es ist nicht mehr nötig, für unterschiedliche Profile der einzelnen Verriegelungselemente unterschiedliche Werkzeuge vorzuhalten, die möglichst exakt in die jeweilige Werkzeugmaschine eingesetzt und insbesondere möglichst exakt relativ zum eigentlichen Paneel ausgerichtet werden müssen. Vielmehr ist es beispielsweise möglich, die Position des Paneels beispielsweise durch Marleirungen an einer Seite des Paneels zu erfassen und beispielsweise einen Druckkopf des 3D-Druckers anhand der dadurch erfassten oder ermittelbaren Position der Seitenfläche des Paneels auszurichten. Auch dadurch werden das Herstellungsverfahren beschleunigt und die Herstellungskosten gesenkt.

Vorzugsweise sind die beiden korrespondierenden Verriegelungselemente ausgebildet, zwei identische Paneele, insbesondere Fußbodenpaneele, miteinander zu verbinden und in wenigstens eine, bevorzugt wenigstens zwei Raumrichtungen relativ zueinander zu verriegeln. Derartige Profile sind bereits bekannt. Die Verriegelung entlang einer Richtung bedeutet, dass eine Bewegung der beiden Paneele relativ zueinander in dieser Richtung nicht mehr möglich ist. Aus dem Stand der Technik sind beispielsweise Profile für Verriegelungselemente bekannt, bei denen die einzelnen Paneele beispielsweise in einer Richtung senkrecht zur Oberseite der unterschiedlichen Paneele und in einer Richtung senkrecht zur Seitenfläche der Paneele, entlang derer die beiden Paneele miteinander verbunden sind, nicht mehr verschoben werden können. Eine Verschiebung der Paneele relativ zueinander entlang der Seitenfläche ist jedoch beispielsweise weiterhin möglich.

Da vorzugsweise das Aufbringen der Verriegelungselemente im gleichen Arbeitsschritt wie das Aufbringen des Versiegelungsmaterials und damit des Herstellens des Teils der Oberfläche geschieht, ist anders als bei Verfahren aus dem Stand der Technik, in denen die Versiegelung einen separaten Arbeitsschritt bedeutet, das Verfahren weiterhin in ökonomisch sinnvollerweise durchzuführen. Insbesondere für den Fall, dass die zu verwendenden Verriegelungsprofile über massive Anteile verfügen, können diese weiterhin aus dem Material des Paneels, beispielsweise des Kerns, hergestellt werden. Dies geschieht vorteilhafterweise, indem die entsprechende Profilierung in die Seitenfläche des Paneels eingebracht wird.

In einer bevorzugten Ausgestaltung werden mehrere verschiedene Versiegelungsmaterialien aufgedruckt. Dabei können unterschiedliche 3D-Drucker oder ein 3D-Drucker mit unterschiedlichen Druckköpfen verwendet werden. Prinzipiell ist es natürlich auch möglich, den gleichen Druckkopf eines 3D-Druckers für unterschiedliche Materialien zu verwenden. Die Verwendung unterschiedlicher Materialien erlaubt es, die unterschiedlichen Funktionen, die durch die aufgebrachte Materialschicht erfüllt werden sollen, optimal zu erfüllen und so beispielsweise die Festigkeits-, Elastizitäts- und Stabilitätseigenschaften einerseits und die optischen und gegebenenfalls weiteren physikalischen und/oder chemischen Eigenschaften andererseits an die jeweils benötigten Anforderungen anzupassen. Dadurch werden die Flexibilität des Verfahrens und die Vielfalt der möglichen herzustellenden Paneele gesteigert.

Bevorzugt weist zumindest ein Teil des Versiegelungsmateriales, der einen Teil der Oberseite des Paneels bildet, wenigstens ein Additiv auf. Beispielhaft seien Korund, Farben und/oder Pigmente, antibakteriell wirkende Substanzen, Glas, insbesondere in Form von Kugeln und/oder Hohlkugeln, und/oder Fasern, beispielsweise aus Cellulose, Glas oder Carbon genannt. Als antibakteriell wirkende Substanzen kann beispielsweise Silber verwendet werden. Die Verwendung von Korund, Glaskugeln und/oder Glashohlkugeln zur Verbesserung des Widerstandes der Oberfläche gegen Abrieb ist aus dem Stand der Technik bekannt. Fasern, die beispielsweise aus Cellulose, Glas oder Carbon bestehen können, werden zur Armierung und/oder zur Ableitung elektrostatischer Aufladungen verwendet. Farben und/oder Pigmente können als zusätzliche optische Gestaltungsoptionen zusätzlich zu dem sich bereits auf der Oberfläche des Paneels befindenden Dekors verwendet werden.

Besonders bevorzugt wird das wenigstens eine Additiv inhomogen in der Nutzschicht verteilt. Da die Additive völlig unterschiedliche Aufgaben lösen können und unterschiedliche Eigenschaften aufweisen, sind nicht alle Additive in dem gesamten aufgebrachten Versiegelungsmaterial oder gegebenenfalls vorhandenen anderen aufgebrachten Materialien nötig. So sind beispielsweise Korund und/oder Glaskugeln zur Verbesserung des Widerstandes gegen Abrieb insbesondere nahe der Oberfläche der aufzubringenden Schicht von Interesse. In tiefer liegenden Regionen sind sie dagegen nur bedingt sinnvoll. Bei dem bisher aus dem Stand der Technik bekannten Auftragungsverfahren von derartigen Beschichtungen lässt sich eine inhomogene Verteilung der einzelnen Additive nicht kontrolliert erreichen, da vorgefertigtes Auftragsmaterial, das alle Additive enthalten muss, die in einer Oberflächenschicht benötigt werden, vollflächig aufgebracht wird. Durch die besondere Ausgestaltung des vorliegenden Verfahrens können nun anforderungsoptimal die einzelnen Additive verwendet werden. Dadurch wird die Menge der benötigten Additive reduziert, wodurch auch die Herstellungskosten sinken.

Die Reduzierung der verwendeten Additivmengen hat zudem zur Folge, dass das Recycling der auf diese Weise hergestellten Paneele nach Gebrauchsende ressourcenschonend möglich ist und zudem Produkteigenschaften erreicht werden können, die bisher als unvereinbar galten.

Vorzugsweise wird das gesamte Versiegelungsmaterial in einem einzelnen Arbeitsschritt aufgebracht. Dies kann beispielsweise durch mehrere Druckköpfe eines einzelnen 3D-Druckers geschehen, die mit unterschiedlichen Materialien und/oder unterschiedlichen Additiven, befüllt werden.

Vorteilhafterweise wird zum Aufdrucken des wenigstens einen Versiegelungsmaterials wenigstens ein thermoplastischer Kunststoff und/oder wenigstens ein strahlenhärtbarer Lack verwendet. So kann der 3D-Drucker beispielsweise nach dem "fused deposition modelling" Verfahren funktionieren, bei dem aufgeschmolzene Thermoplaste schichtweise aufgetragen werden. Alternativ dazu kann auch ein 3D-Drucker nach dem "multijet modelling" Verfahren verwendet werden, bei den härtbaren Lacken, die beispielsweise durch UV-Strahlung oder Elektronenstrahlung gehärtet werden können, gearbeitet wird. Unabhängig von der Art des Materials können verschiedenste Eigenschaften durch Variationen der Produkte angepasst werden. Natürlich kann es sinnvoll sein, unterschiedliche Materialien für die unterschiedlichen Funktionen aufzubringen. So ist es denkbar, zunächst ein erstes Versiegelungsmaterial aufzubringen, das für eine Versiegelung der jeweiligen Seitenfläche gegen das Eindringen beispielsweise von Wasser, sorgt. Auf diese so aufgebrachten Teilschichten können weitere Schichten aufgebracht werden, die weitere dekorative Effekte in dem durch das Material gebildeten Teil der Oberfläche des Paneels bilden und/oder ein Verriegelungselement bilden.
So kann beispielsweise ein Anteil des Verriegelungselementes elastischer ausgebildet sein als ein benachbarter Anteil, sodass beispielsweise beim Verbinden der Paneele das Verriegelungselement an dieser Stelle zusammengedrückt werden kann. Nachdem die einzelnen Paneele in ihre endgültigen Positionen gebracht wurden, kann das so zusammengedrückte Verriegelungselement entspannen und beispielsweise in eine dafür vorgesehene Hinterschneidung einschnappen. Anders als bei Verriegelungselementen aus dem Stand der Technik, die vollständig aus dem gleichen Material bestehen, ist es auf diese Weise möglich, die besonders belasteten Bereiche der Verriegelungselemente besonders elastisch auszubilden und somit ein Abbrechen zu vermeiden.
Vorzugsweise wird das Paneel mit der durch den 3D-Drucker zu bedruckenden Seitenfläche nach oben angeordnet. Auf diese Weise kann das durch den Drucker aufgebrachte Material der Schwerkraft folgend aufgebracht werden und ein Zerfließen oder Verschmieren im noch nicht ausgehärteten Zustand wird weitestgehend oder sogar vollständig verhindert. Werden unterschiedliche Seitenflächen mit wenigstens einem 3D-Drucker beschichtet, ist es von Vorteil, die jeweils zu bedruckende Seitenfläche nach oben auszurichten und somit das Paneel zwischen einzelnen Druckvorgängen auf den unterschiedlichen Seitenflächen zu drehen. Ebenfalls offenbart ist eine Vorrichtung zum Durchführen eines hier beschriebenen Verfahrens, die wenigstens einen 3D-Drucker zum Aufdrucken wenigstens eines Teils des wenigstens einen Versiegelungsmaterials aufweist. Vorteilhafterweise verfügt der wenigstens eine 3D-Drucker über wenigstens zwei Druckköpfe, durch die unterschiedliche Materialien aufgedruckt werden können. Derartige 3D-Drucker sind aus dem Stand der Technik prinzipiell bekannt. Vorzugsweise verfügt die Vorrichtung zudem über eine Profilierungseinrichtung zum Einbringen einer Profilierung in wenigstens eine Seitenfläche eines Paneels. Auf diese Weise lässt sich zunächst die Profilierung einbringen, wobei die unterschiedlichen Anteile des so eingebrachten Profils anschließend mit dem Versiegelungsmaterial bedruckt werden können.

Die Erfindung löst die gestellte Aufgabe zudem durch ein Paneel, insbesondere ein Fußbodenpaneel, das durch eines der hier beschriebenen Verfahren herstellbar ist.

Mit Hilfe der beiliegenden Figuren werden nachfolgend Ausführungsbeispiele der vorliegenden Erfindung näher erläutert. Es zeigt:
- Figur 1a und 1b-: zwei Paneele gemäß Ausführungsformen der vorliegenden Erfindung,
- Figur 2 -: eine weitere Ausführungsform eines Paneels,
- Figur 3 -: unterschiedliche Stadien während des Verbindens zweiter Paneele,
- Figur 4 -: eine weitere Ausführungsform eines Paneels,
- Figur 5 -: einen vergrößerten Ausschnitt aus der Oberseite eines Paneels und
- Figuren 6a bis 6c -: weitere Ausführungsformen eines Paneels.

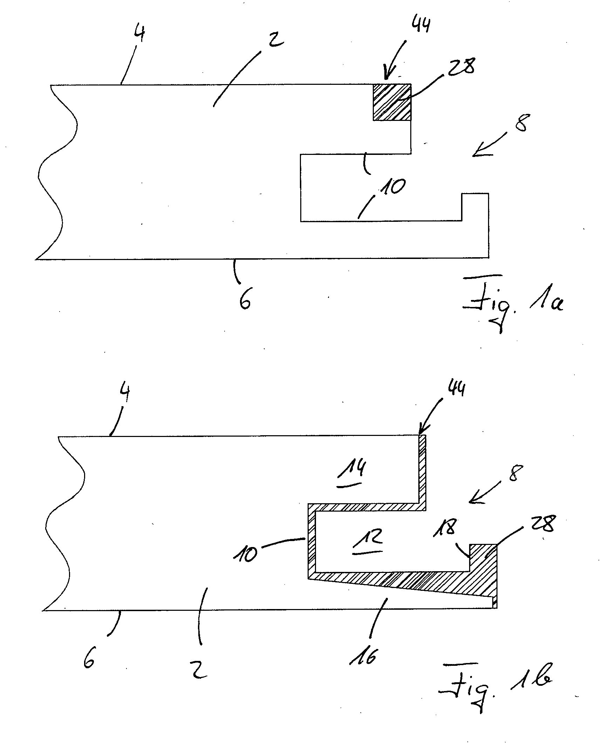

Figur 1a und 1b zeigen zwei Paneele 2, mit einer Oberseite 4, einer der Oberseite 4 gegenüberliegenden Unterseite 6 und einer Seitenfläche 8. Das Paneel 2 kann in seinem Aufbau zwischen Oberseite 4 und Unterseite 6 aus einer Vielzahl unterschiedlicher Schichten, unterschiedlicher Materialien und Funktionalitäten bestehen, die der besseren Übersichtigkeit wegen vorliegend nicht gezeigt sind. In den gezeigten Ausführungsbeispielen ist in die Seitenfläche 8 eine Profilierung 10 eingebracht. Die Profilierung 10 besteht in Figur 1b aus einer Nut 12, die über einen kurzen Schenkel 14 und einen langen Schenkel 16 verfügt. Schraffiert ist das Versiegelungsmaterial 28, also das Material, das vom 3D-Drucker aufgebracht ist, dargestellt. In Figur 1 erkennt man, dass ein Teil 44 des Materials 28 keine Verriegelungsfunktion ausübt, sondern lediglich als Dekorelement für die Oberseite 4 gedacht ist. Im in Figur 1b gezeigten Ausführungsbeispiel hingegen ist die vollständige Seitenfläche 8, in die eine deutlich einfachere Profilierung 10 eingebracht ist, mit dem Versiegelungsmaterial 28 bedeckt, das über den 3D-Drucker aufgebracht wurde. Auch hier ist ein Teil 44 des Versiegelungsmaterials 28 an der Oberseite 4 des Paneels 2 zu erkennen und sorgt für den gewünschten dekorativen Effekt. Das Material 28, das die vollständige Seitenfläche 8 gegen das Eindringen von Feuchtigkeit versiegelt, bildet zudem ein Verriegelungselement 18, das in entsprechend korrespondierende Verriegelungselemente eingreifen kann.

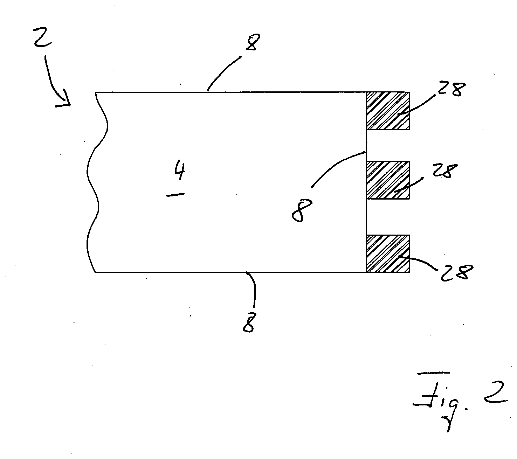

Während im in Figur 1b dargestellten Ausführungsbeispiel das aufgebrachte Versiegelungsmaterial 28 die gesamte Seitenfläche 8 des Paneels 2 abdeckt und so für eine wasserdichte Versiegelung der gesamten Seitenfläche 8 sorgt, ist in Figur 2 dargestellt, dass auch eine teilweise Bedruckung der Seitenfläche 8 mit dem Versiegelungsmaterial 28 möglich ist. Dabei zeigt Figur 2 eine schematische Draufsicht auf die Oberseite 4 des Paneels 2, bei der lediglich die in Figur 2 rechte Seitenfläche 8 bedruckt wurde. Je nach gewünschtem optischen Effekt an der Oberfläche des Paneels sowie dem benötigten Ausmaß der Versiegelung und je nach gewünschtem Verriegelungselement, der Stärke der benötigten Verriegelung und der Richtung, in der die Verriegelung wirken soll, können unterschiedlichste Mengen des Versiegelungsmaterials und Verriegelungselemente mit unterschiedlichen Mengen des Materials 28 auf die Seitenfläche 8 aufgebracht werden. Je weniger Material 8 aufgebracht werden muss, desto stärker wird die Herstellung des Paneels 2 beschleunigt. Gleichzeitig können durch Materialeinsparungen auch Herstellungskosten reduziert werden.

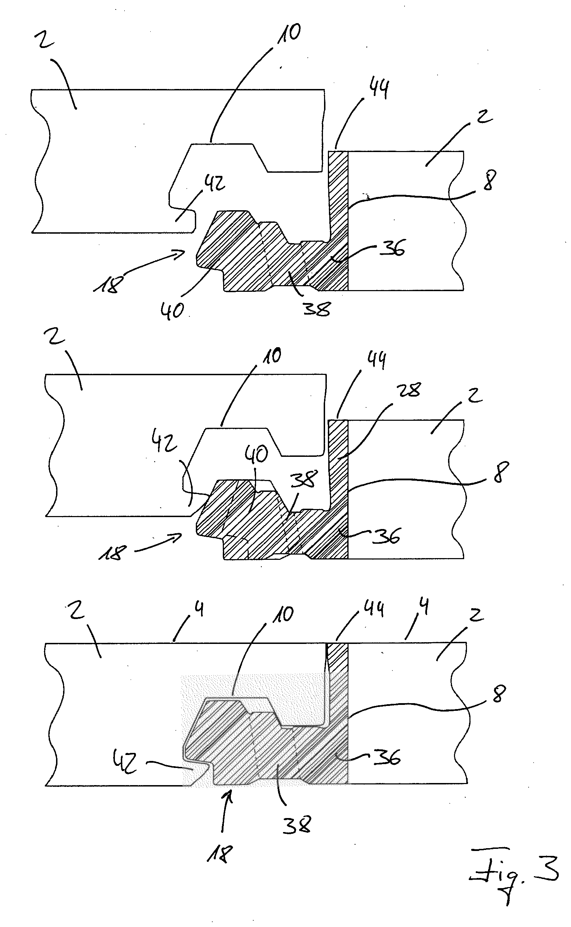

Figur 3 zeigt in den drei Teildarstellungen zwei Paneele 2 in unterschiedlichen Stadien während des Verbindens der beiden Paneele 2. Insbesondere im oberen Teil der Figur 3 ist gut zu erkennen, das eine Seitenfläche 8 des Paneels 2 keinerlei Profilierung aufweist, während in die Seitenfläche 8 des linken Paneels 2 eine Profilierung 10 eingebracht wurde. An der Seitenkante 8 des in Figur 3 rechts gezeigten Paneels 2 ist mittels des 3D-Druckers das Versiegelungsmaterial 28 aufgebracht worden, das ein Verriegelungselement 18 bildet, das aus einem ersten Anteil 36, einem zweiten Anteil 38 und einem dritten Anteil 40 besteht. Die Anteile könne aus unterschiedlichen Materialien bestehen, wobei im gezeigten Ausführungsbeispiel der erste Anteil 36 und der dritte Anteil 40 aus einem Material und der zweite Anteil 38 aus einem anderen Material besteht.

Im in Figur 3 gezeigten Ausführungsbeispiel wird nun das linke Paneel von oben nach unten abgesenkt, um die beiden Paneele 2 miteinander zu verbinden. Dabei trifft die untere Nase 42 auf das Verriegelungselement 18. Dies ist im mittleren Bereich der Figur 3 dargestellt. Dadurch wird der zweite Anteil 38 gestaucht, sodass der dritte Anteil 40 im Vergleich zum oberen Teil der Figur 3 nach rechts verschoben wird. Dies ist durch gestrichelte Linien dargestellt. Das Material des zweiten Anteils 38 verfügt im gezeigten Ausführungsbeispiel über eine deutlich größere Elastizität als das Material des ersten Anteils 36 oder das des dritten Anteils 40. Auf diese Weise kann sehr einfach und genau vorbestimmt werden, welche Anteile des aufgedruckten Verriegelungselementes 18 wie stark und in welche Richtung gestaucht und verbogen werden können, um beispielsweise zwei Paneele 2 miteinander zu verbinden.

Im unteren Bereich der Figur 3 ist gezeigt, wie die beiden Paneele 2 im verbundenen Zustand aneinander anliegen. Die Nase 42 schnappt hinter das Verriegelungselement 18, was dazu führt, dass der zweite Anteil 38 sich entspannen und wieder ausdehnen kann. Anstatt ein weiches Material für den zweiten Anteil 38 zu verwenden, könnte stattdessen auch ein Schlitz vorgesehen sein, der im Wesentlichen senkrecht zur Oberseite 4 beziehungsweise Unterseite 6 verläuft, und der Anteil 40 nur an seinen Endbereichen mit dem Anteil 36 verbunden ist. Man erkennt, dass der Teil 44 des mit dem 3D-Drucker aufgebrachten Materials 28 nicht zu einer Verriegelung führt, wohl aber zwischen den beiden Oberseiten 4 der miteinander verbundenen Paneele 2 sichtbar bleibt. Dies kann zu Dekorationszwecken verwendet werden, um beispielsweise Fugen zwischen nachgebildeten Fliesen und/oder Steinen nachzubilden.

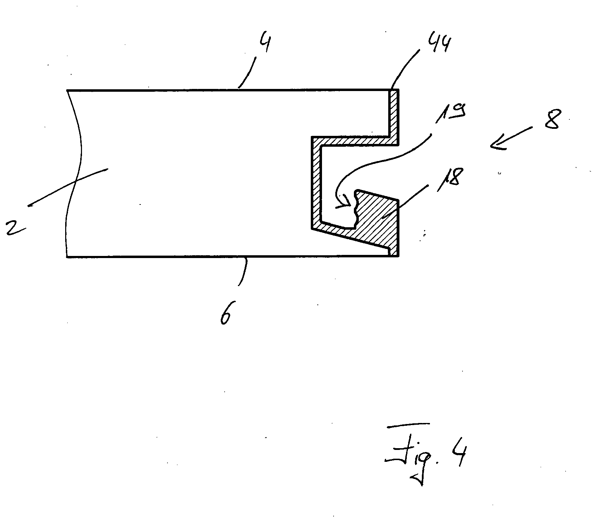

Wie Figur 4 zeigt, können mit dem vorliegenden Verfahren auch Verriegelungselemente 18 hergestellt werden, die Hinterschneidungen 19 aufweisen, die zur Innenseite des Paneels 2 hin geöffnet sind. Für eine solch komplizierte Profilausbildung müssen die Paneele 2 beim Ausführen des 3D-Druckes aufrecht gestellt werden. Eine solche aufrechte Positionierung des zu bedruckenden Paneels 2 ist bei den anderen gezeigten Ausführungsformen zwar nicht notwendig, jedoch Vorteilhaft. Allgemein ist es von Vorteil, wenn der zu bedruckende Anteil der Seitenfläche 8 nach oben zeigend ausgerichtet wird. Bei komplizierter ausgebildeter Seitenfläche 8 etwa durch Vorprofilierungen kann dies dazu führen, dass das Paneel 2 beim Bedrucken oder zwischen zwei Druckvorgängen gedreht wird.

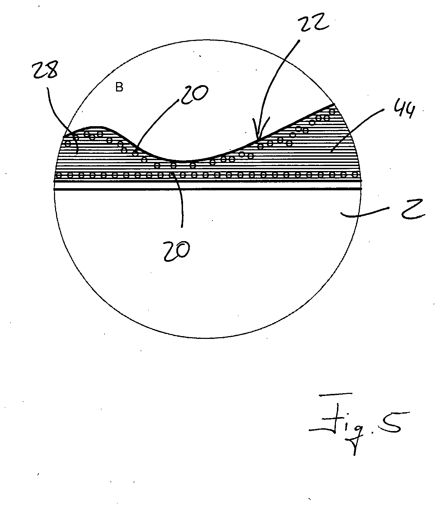

Figur 5 zeigt einen vergrößerten Ausschnitt aus dem Teil 44, der Teil der Oberseite 4 des Paneels 2 ist. Das Versiegelungsmaterial 28 verfügt über Additive 20 die in zwei voneinander getrennten Bereichen, nämlich einmal am unteren Ende und einmal im oberen Bereich des Versiegelungsmaterials 28 angeordnet sind. Durch diese inhomogene Verteilung des Additivs 20, die durch die Verwendung des 3D-Druckers ermöglicht wird, lassen sich die Additive in optimaler Weise dort anwenden, wo sie benötigt werden. Man erkennt zudem, dass in der Oberseite 4 eine Struktur 22 vorhanden ist, die ebenfalls durch den verwendeten 3D-Drucker erzeugt werden kann. Dadurch lässt sich auch der haptische Eindruck dieses Teils der Oberseite 4 beeinflussen.

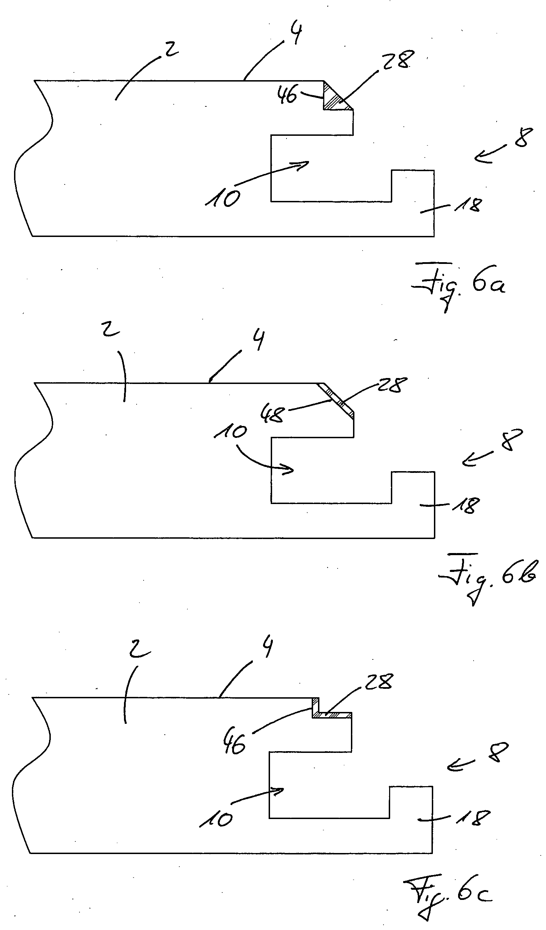

Die Figuren 6a bis 6c zeigen drei unterschiedliche Ausführungsformen eines Paneels 2, bei dem die Seitenfläche 8 eine Profilierung 10 sowie ein Verriegelungselement 18 aufweist. Alle diese Elemente sind in den gezeigten Ausführungsbeispielen aus dem Material des Paneels herausgefräst oder herausgesägt worden. Ein Teil der Profilierung 10 ist dabei an einer Seitenkante, die die Oberseite 4 mit der Seitenfläche 8 verbindet, angeordnet. Im in Figur 6a dargestellten Ausführungsbeispiel wurde eine L-Fase 46 eingebracht, die so mit dem Versiegelungsmaterial 28 gefüllt wurde, dass sich eine abgeschrägte Fase ergibt. An der in Figur 6a nicht gezeigten der Seitenfläche 8 gegenüberliegenden Seitenfläche kann eine ähnliche Struktur vorhanden sein, sodass die beiden Anteile, die mit dem Versiegelungsmaterial 28 hergestellt wurden, eine V-Fuge bilden.

Eine ähnliche Fuge wird im in Figur 6b gezeigten Ausführungsbeispiel erreicht. Der Teil der Profilierung, der an der Seitenkante zwischen der Oberseite 4 und der Seitenfläche 8 angeordnet ist, ist jedoch im in Figur 6b gezeigten Ausführungsbeispiel eine einfache abgeschrägte Fase 48, die mit dem Versiegelungsmaterial 28 beschichtet wurde. Auch hier wird im verlegten Zustand zweier Paneele eine V-Fuge erreicht, wobei jedoch deutlich weniger Versiegelungsmaterial 28 verwendet wird.

In Figur 6c ist wieder eine L-Fase 46 in die Seitenkante zwischen der Oberseite 4 und der Seitenfläche 8 eingebracht worden. Anders als im in Figur 6a gezeigten Ausführungsbeispiel ist diese L-Fase jedoch nicht durch das Versiegelungsmaterial 28 zumindest teilweise aufgefüllt worden, sodass sich eine abgeschrägte Fase ergibt, sondern die beiden Seitenflächen, die die L-Fase 46 bilden, wurden mit einer Schicht des Versiegelungsmaterials 28 bedruckt. Im verlegten Zustand zweier gleicher Paneele ergibt sich daher keine V-Fuge, sondern eine rechteckige Vertiefung oder Nut.

Man erkennt bei den drei gezeigten Ausführungsbeispielen in den Figuren 6a bis 6c, dass das Versiegelungsmaterial 28 nur teilweise auf die Seitenfläche 8 aufgebracht ist, wobei in den gezeigten Ausführungsbeispielen das Hauptaugenmerk auf den Teil des Versiegelungsmaterials 28 gerichtet ist, der den Teil 44 der Oberfläche 4 des Paneels 2 bildet.

### Bezugszeichenliste

- 2: Paneel
- 4: Oberseite
- 6: Unterseite
- 8: Seitenfläche
- 10: Profilierung
- 12: Nut
- 14: kurzer Schenkel
- 16: langer Schenkel
- 18: Verriegelungselement
- 19: Hinterschneidung
- 20: Additiv
- 22: Struktur
- 28: Versiegelungsmaterial
- 36: erster Anteil
- 38: zweiter Anteil
- 40: dritter Anteil
- 42: Nase
- 44: Teil
- 46: L-Fase
- 48: Fase

## Patentansprüche

1. Verfahren zum Herstellen eines Paneels (2), insbesondere eines Fußbodenpaneels, das eine Oberseite (4), eine der Oberseite (4) gegenüberliegende Unterseite (6) und wenigstens eine Seitenfläche (8) aufweist, **dadurch gekennzeichnet, dass** die wenigstens eine Seitenfläche (8) wenigstens teilweise mittels eines 3D-Druckers mit einem Versiegelungsmaterial (28) bedruckt wird, wobei ein Teil (44) des Versiegelungsmaterials (28) einen Teil der Oberseite (4) des Paneels (2) bildet.

2. Verfahren nach Anspruch 1, **dadurch gekennzeichnet, dass** die gesamte Seitenfläche (8) bedruckt wird.

3. Verfahren nach Anspruch 1 oder 2, **dadurch gekennzeichnet, dass** das Versiegelungsmaterial (28) so aufgedruckt wird, dass der Teil der Oberfläche (4) des Paneels, der durch den einen Teil (44) des Versiegelungsmaterials (28) gebildet wird, eine Oberflächenstruktur (22) aufweist.

4. Verfahren nach Anspruch 3, **dadurch gekennzeichnet, dass** die Oberflächenstruktur (22) derart ausgebildet ist, dass im verlegten Zustand zweier Paneele (2) eine Fuge, insbesondere eine Steinfuge, Fliesenfuge oder Parkettfuge, nachgebildet wird.

5. Verfahren nach einem der vorstehenden Ansprüche, **dadurch gekennzeichnet, dass** in die wenigstens eine Seitenfläche (8) eine Profilierung (10) eingebracht wird, bevor die Seitenfläche (8) mit dem Versiegelungsmaterial (28) bedruckt wird.

6. Verfahren nach Anspruch 5, **dadurch gekennzeichnet, dass** die Profilierung (10) eine Fase und/oder eine Nut (12) und/oder eine Feder und/oder ein modifizierter Falz ist.

7. Verfahren nach einem der vorstehenden Ansprüche, **dadurch gekennzeichnet, dass** an der wenigstens einen Seitenfläche (8) ein Verriegelungselement (18) angeordnet ist, das zumindest teilweise mittels des 3D -Druckers aufgedruckt wird.

8. Verfahren nach Anspruch 7, **dadurch gekennzeichnet, dass** an wenigstens zwei einander gegenüberliegenden Seitenflächen (8) zueinander korrespondierende Verriegelungselemente (18) jeweils wenigstens teilweise mittels des 3D-Druckers aufgedruckt werden.

9. Verfahren nach einem der vorstehenden Ansprüche, **dadurch gekennzeichnet, dass** mehrere Versiegelungsmaterialien (28) aufgedruckt werden.

10. Verfahren nach einem der vorstehenden Ansprüche, **dadurch gekennzeichnet, dass** zumindest der Teil (44) des Versiegelungsmaterials (28), der einen Teil der Oberseite (4) des Paneels (2) bildet, wenigstens ein Additiv (20) aufweist, beispielsweise Korund, Farben und/oder Pigmente, antibakteriell wirkende Substanzen, Glas, insbesondere in Form von Kugeln und/oder Hohlkugeln, und/oder Fasern, beispielsweise aus Cellulose, Glas oder Carbon, wobei als antibakteriell wirkende Substanz beispielsweise Silber verwendet wird.

11. Verfahren nach einem der vorstehenden Ansprüche, **dadurch gekennzeichnet, dass** das Versiegelungsmaterial (28) in einem Arbeitsschritt aufgebracht wird.

12. Verfahren nach einem der vorstehenden Ansprüche, **dadurch gekennzeichnet, dass** zum Aufdrucken wenigstens ein thermoplastischer Kunststoff und/oder wenigstens ein strahlenhärtbarer Lack verwendet wird.

13. Paneel (2), insbesondere Fußbodenpaneel, herstellbar nach einem Verfahren gemäß einem der Ansprüche 1 bis 12.

## Claims

1. A method for manufacturing a panel (2), in particular a floor panel, having an upper side (4), an underside (6) opposite the upper side (4) and at least one side surface (8), **characterized in that** at least one side surface (8) is at least partially printed with a sealing material (28) by means of a 3D printer, wherein one part (44) of the sealing material (28) forms a part of the upper side (4) of the panel (2).

2. The method according to claim 1, **characterized in that** the entire side surface (8) is printed.

3. The method according to claim 1 or 2, **characterized in that** the sealing material (28) is printed such that the part of the upper side (4) of the panel which is formed by a part (44) of the sealing material (28) has a surface structure (22) .

4. The method according to claim 3, **characterized in that** the surface structure (22) is configured to replicate a joint, in particular a stone joint, a tile joint or a parquet joint, in a condition where two panels (2) are laid.

5. The method according to any one of the preceding claims, **characterized in that** a profile (10) is introduced into at least one side surface (8), before the side surface (8) is printed with the sealing material (28).

6. The method according to claim 5, **characterized in that** the profile (10) is a chamfer and/or a groove (12) and/or a tongue and/or a modified rabbet.

7. The method according to any one of the preceding claims, **characterized in that** a locking member (18), which is at least partially printed by means of a 3D printer, is arranged on at least one side surface (8).

8. The method according to claim 7, **characterized in that** at at least two side surfaces (8) that are opposite each other, locking members (18) that correspond with each other are at least partially printed by means of a 3-D printer.

9. The method according to any one of the preceding claims, **characterized in that** a plurality of sealing materials (28) are printed.

10. The method according to any one of the preceding claims, **characterized in that** at least the part (44) of the sealing material (28) which forms a part of the upper side (4) of the panel (2) has at least one additive (20), for example corundum, paints and/or pigments, antibacterial substances, glass, in particular in the shape of spheres and/or hollow spheres, and/or fibers, for example from cellulose, glass or carbon, wherein, for example, silver is used as the antibacterial substance.

11. The method according to any one of the preceding claims, **characterized in that** the sealing material (28) is applied in one operation.

12. The method according to any one of the preceding claims, **characterized in that** at least one thermoplastic material and/or at least one radiation-curable lacquer is used for printing.

13. A panel (2), in particular a floor panel, able to be manufactured by a method according to any one of claims 1 to 12.

## Revendications

1. Procédé de fabrication d'un panneau (2), en particulier d'un panneau de plancher, qui comprend une face supérieure (4), une face inférieure (6) opposée à la face supérieure (4), et au moins une surface latérale (8),
**caractérisé en ce que**
ladite au moins une surface latérale (8) est pourvue par impression au moins partiellement d'un matériau de scellement (28) au moyen d'une imprimante 3D, une partie (44) du matériau de scellement (28) formant une partie de la face supérieure (4) du panneau (2).

2. Procédé selon la revendication 1, **caractérisé en ce que** la totalité de la surface latérale (8) est pourvue d'une impression.

3. Procédé selon la revendication 1 ou 2, **caractérisé en ce que** le matériau de scellement (28) est imprimé de telle sorte que la partie de la surface (4) du panneau qui est formée par une partie (44) du matériau de scellement (28) présente une structure surfacique (22).

4. Procédé selon la revendication 3, **caractérisé en ce que** la structure de surface (22) est réalisée de telle sorte que dans l'état posé de deux panneaux (21), une jointure, en particulier une jointure de type pierre, de type carrelage ou de type parquet est reproduite.

5. Procédé selon l'une des revendications précédentes, **caractérisé en ce qu'**un profilage (10) est ménagé dans ladite au moins une surface latérale (8), avant de pourvoir la surface latérale (8) d'une impression avec le matériau de scellement (28).

6. Procédé selon la revendication 5, **caractérisé en ce que** le profilage (10) est un chanfrein et/ou une rainure (12) et/ou une languette et/ou une feuillure modifiée.

7. Procédé selon l'une des revendications précédentes,
**caractérisé en ce que**
un élément de verrouillage (18) est agencé sur ladite au moins une surface latérale (8), qui est imprimé au moins partiellement au moyen de l'imprimante 3D.

8. Procédé selon la revendication 7,
**caractérisé en ce que**
sur au moins deux surfaces latérales (8) opposées l'une à l'autre, des éléments de verrouillage (18) conjugués sont imprimés chacun au moins partiellement au moyen de l'imprimante 3D.

9. Procédé selon l'une des revendications précédentes,
**caractérisé en ce que**
plusieurs matériaux de scellement (28) sont imprimés.

10. Procédé selon l'une des revendications précédentes,
**caractérisé en ce que**
au moins la partie (44) du matériau de scellement (28) qui forme une partie de la face supérieure (4) du panneau (2) comprend au moins un additif (20), par exemple du corindon, des colorants et/ou des pigments, des substances à effet antibactérien, du verre, en particulier sous la forme de billes et/ou de billes creuses, et/ou des fibres, par exemple en cellulose, en verre ou en carbone, et à titre de substance à effet antibactérien on utilise par exemple de l'argent.

11. Procédé selon l'une des revendications précédentes,
**caractérisé en ce que**
le matériau de scellement (28) est déposé en une seule passe de travail.

12. Procédé selon l'une des revendications précédentes, **caractérisé en ce que** pour l'impression, on utilise au moins une matière synthétique thermoplastique et/ou un vernis durcissable par irradiation.

13. Panneau (2), en particulier panneau de plancher, fabriqué par un procédé selon l'une des revendications 1 à 12.
